# EUROPEAN PATENT SPECIFICATION

(11) **EP 3 691 983 B1**
(45) Date of publication and mention of the grant of the patent: **01.06.2022**
(21) Application number: 18811368.2
(22) Date of filing: 26.09.2018
(51) Int. Cl.: B65H 54/58, B60P 7/08

(54) **WINDING DEVICE FOR BELTS AND ROPES**
AUFWICKELVORRICHTUNG FÜR RIEMEN UND SEILE
DISPOSITIF D'ENROULEMENT POUR COURROIES ET CORDES

(30) Priority: 04.10.2017 IT 201700110772
(43) Date of publication of application: 12.08.2020
(73) Proprietor: Mec.Tre S.r.l., 10139 Torino (IT)
(72) Inventor: PANERO, Giampiero, I-10139 Torino (IT)
(74) Representative: Garavelli, Paolo
(86) International application number: PCT/IT2018/000121
(87) International publication number: WO 2019/069333

(56) References cited:
- WO-A1-98/04490
- DE-A1- 10 115 297
- DE-U1-202009 001 601
- JP-U- S5 613 457
- SE-L- 9 401 487
- US-A- 3 954 226
- US-A1- 2012 211 582
- US-B1- 9 676 590

## Description

The present invention refers to a winding device for belts and ropes, in particular a manual winding device, usable to wind belts and ropes used for binding and fastening loads having every shape and size on flatbeds of transport means, such as trucks, railway wagons, ship loading planes, or under any situation in which it is necessary to fasten an object to a plane and make it stable.

More in particular, the winding device for belts and ropes of the invention can be used to wind belts and ropes at the end of their transport, when they are wound to be stored for their following use.

It is known in the art to use belts, which are laid on a load to be fastened after having been hooked on one side and subjected to traction by means of a pawl or ratchet to tighten the load; in order to have a comfortable use, such belts are wound on their flat part to obtain a roll of belt to be easily unwound and/or laid onto the load, leaving it above the load, allowing it to easily reach the opposite side to its fastening point.

For such use, it is necessary that the belt is supplied and kept by the users in a package as compact and well aligned wound.

These known belts and ropes have the problem that, when it is necessary to perform numerous binding and ordering operations for them, it is scarcely practical to re-wind the belt, especially in case of transporters who have numerous belts to collect and re-wind many times a day, with a great waste of time, above all in case of negative atmospheric conditions, for example when there is rain or snow, which complicate and increase the discomfort in re-winding the belts in well composed rolls.

Winding devices for belts and ropes are known, equipped with mechanisms, or with motors, which have big overall sizes and must be fastened, for example to a vehicle, to be used, thereby resulting complex and scarcely practical to use.

Documents SE-L-9 401 487, US-A-3 954 226, US-A1-2012/211582, DE-U1-20 2009 001601, US-B1-9 676 590 and WO-A1-98/04490 disclose winding devices according to the preamble of claim 1.

Object of the present invention is solving the above prior art problems, by providing a winding device for belts and ropes which can be easily used even under negative weather conditions, and allows reducing the necessary time to re-order and place the belts or ropes, further preventing them from deteriorating due to an incorrect winding.

Another object of the invention is providing a winding device for belts and ropes which has reduced weight, sizes and cost and can be easily made.

The above and other objects and advantages of the invention, as will appear from the following description, are obtained with a winding device for belts and ropes as claimed in the dependent claims.

Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:

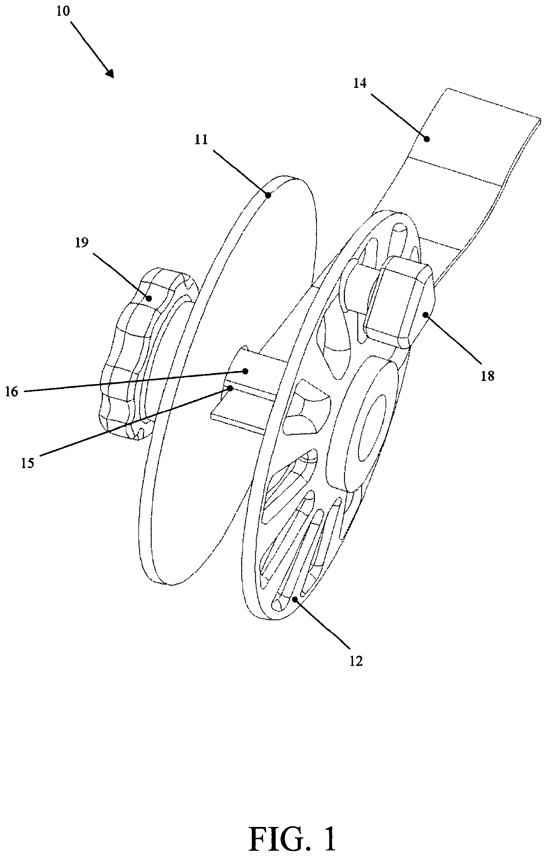

- Figure 1 is a perspective view of a winding device for belts and ropes with a belt to be wound;

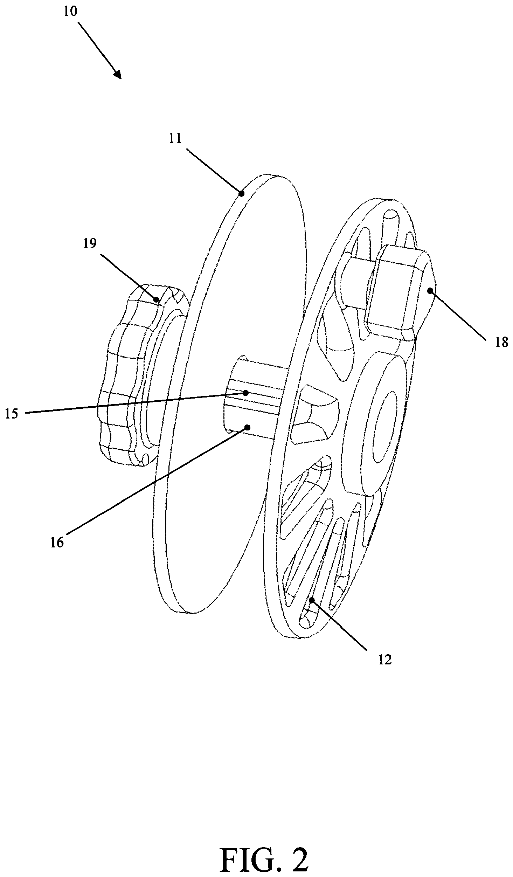

- Figure 2 is a perspective view of the winding device for belts and ropes ;

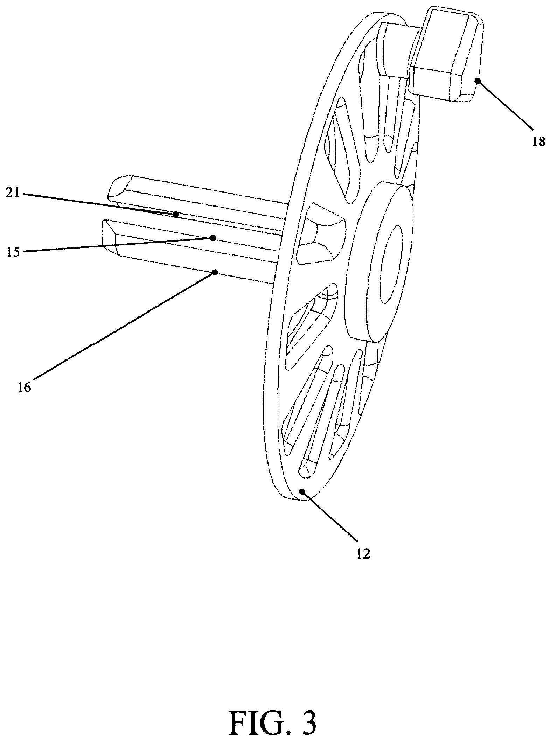

- Figure 3 is a perspective view of a component of the winding device for belts and ropes ;
- Figure 4 is a perspective view of a non-claimed pin of the winding device for belts and ropes ;
- Figures 5a and 5b are perspective views of a pin in a first embodiment of the winding device for belts and ropes according to the present invention;
- Figure 6 is a perspective view of a pin in a second embodiment of the winding device for belts and ropes according to the present invention;
- Figures 7a and 7b are perspective views of a non-claimed pin of the winding device for belts and ropes ; and
- Figures 8a, 8b and 8c are perspective views of a non-claimed winding device for belts and ropes .

With reference to the Figures, winding devices for belts and ropes are shown and described.

The winding device 10 for belts and ropes of the invention comprises a first element 11, a second element 12 rotatably and removably connected to the first element 11 and comprising fastening means 15 of a belt 14 or rope, catching means 18 connected to the second element 12 to allow a user to manually rotate the second element 12 and the fastening means to wind the belt or rope 14 blocked by the fastening means 15.

In particular, the first element 11 and the second element 12 are removably connected to allow extracting the belt or rope 14 when it is wound, after the first element 11 and the second element 12 have been separated.

Preferably, the second element 12 comprises a pin 16 rotatably and removably connected to the first element 11, on which pin 16 the fastening means 15 are made; for example, the pin 16 comprises a seat 21 rotatably and removably connectable to a fastening pin 22 made on the first element 11; for example, the seat 21 comprises an annular element which can be inserted into a corresponding seat of the fastening pin 22, in order to block the translation of the second element 12 and of the pin 16 with respect to the first element 11, however leaving them free of rotating.

In a preferred way, the fastening means 15 are composed of a notch 15, preferably longitudinal and through, made on the pin 16, within which an end of the belt or rope 14 can be inserted; preferably, the first element 11 and the second element 12 have a substantially plane shape, more preferably a disk, to allow placing the device 10 occupying a very small space, storing it together with the wound belts 14, leaving the last belt 14 wound thereon.

In a preferred way, the winding device 10 for belts and ropes of the invention comprises second catching means 19 connected to the first element 11 to allow the user a firm grip of the winding device 10 for belts and ropes 14, in particular of the first element 11, when he manually rotates the second element 12 with respect to the first element 11 to wind the belt or the rope 14; for example the catching means 18, 19 are knobs.

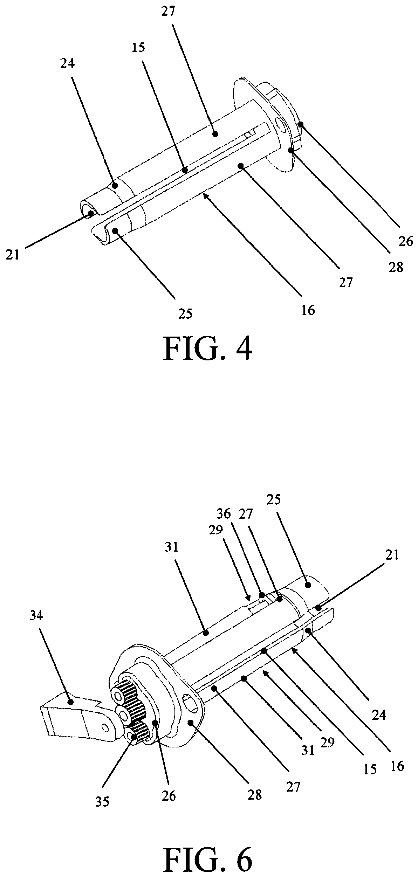

In a winding device 10 for belts and ropes 14 not according to the invention, shown in Figure 4, the pin 16 comprises a part 24 being shaped as a cone and/or has an end 25 with reduced diameter to keep a distance between the belt or the rope 14 and the pin 16, when it is wound thereon, in order to decrease the friction between the wound belt or rope 14 and the pin 16, allowing an easy removal of the belt 14 from the device 10 once it has been wound, and the first element 11 has been separated from the second element 12.

In a preferred way, the pin 16 is formed of two hollow semi-cylindrical shells 27, for example made of moulded iron, which, when flanked, form the pin, leaving between them the notch 15 for inserting the edge of the belt 14 and the following winding.

Preferably, the two shells 27 which form the pin 16 have a second enlarged end 26 adapted to be engaged in the edge of a ring-nut 28 which is afterwards fastened, for example screwed onto the second element 12 to fasten the pin 16 thereto.

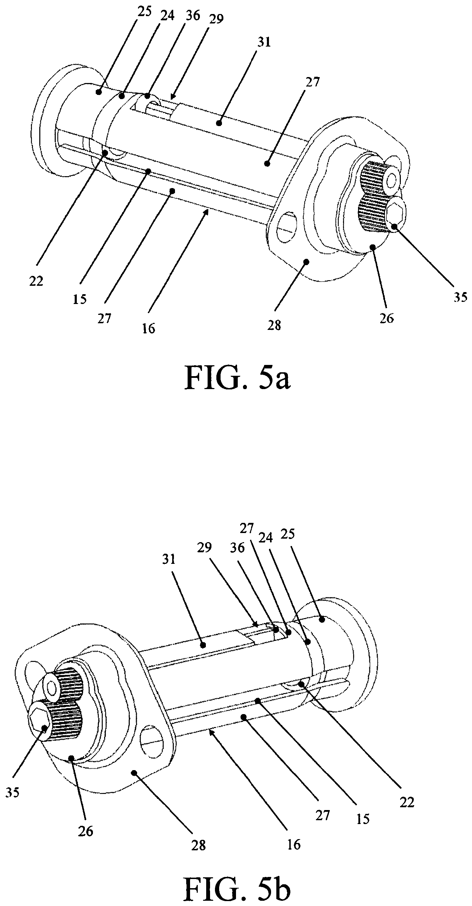

In a first embodiment of the winding device 10 for belts and ropes 14 of the invention shown in Figures 5a and 5b, the pin 16 comprises a housing 29 made at least in a shell 27 in which a projecting element 31, for example a rod or a quarry, is inserted, rotatable on its axis and having a first external surface adapted to go out of the housing 29 when the projecting element 31 is rotated in a first position, thereby allowing to increase the diameter of the pin 16, and having a second external surface for example plane, which remains inside the housing 29 when the projecting element 31 is rotated in a second position, to enable the belt 14 to go out of the pin 16 when it is wound, loosening it and thereby increasing the diameter of the pin 16 on which it has been wound.

For example, the rotation of the projecting element 31 is performed through a lever 34 connected thereto through gears 35 and located on the second element 12.

At an end of the projecting element 31, next to the first element 11, a projection 36 is obtained, preferably shaped as a disk, adapted to be inserted into a continuous circular seat obtained in the first element 11, to connect the first element 11 and the second rotatable element 12, preventing the disengagement of the pin 16 during the winding operation.

With the rotation of the projecting element 31, also the projection 36 enters inside the housing 29 when the projecting element 31 is rotated in the second position, allowing to separate the first element 11 and the second rotatable element 12.

Advantageously, this projection 36 does not prevent the rotation of the second element 12 and does not create additional frictions, makes the device 10 stable during the first winding turns and makes it solid.

In a second embodiment of the winding device 10 for belts and ropes 14 of the invention shown in Figure 6, the pin 16 comprises two housings 29, each one made as a shell 27, in each of which a projecting element 31, as those previously described, is inserted.

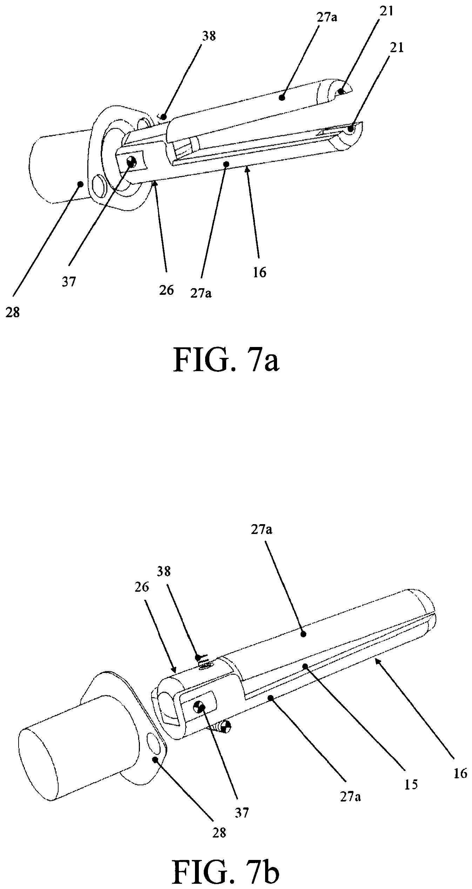

In a winding device 10 for belts and ropes 14 not according to the invention shown in Figures 7a and 7b, the pin 16 is formed of two filled semi-cylindrical shells 27a, for example made of plastics or aluminium or steel, hinged in a hinge 37 at their second end 26 and made in order to leave a space between them to form the notch 15, when are closed to compose the pin 16.

The hinge 37 is perpendicular to the axis of the pin 16 formed of the shells 27a which are closed on the fastening pin 22 made in the first element 11, through an elastic element 38, for example a helical spring, in order to exert a force adapted to keep the shells 27a closed inside the ring-nut 28 and allow the rotation of the second element 12 and of the pin 16 with respect to the first element 11.

Upon separating the first element 11 from the second element 12, the hinge 37 allows the two shells 27 to approach, decreasing the tension at the centre of the wound belt 14 wound and enabling their withdrawal from the pin 16.

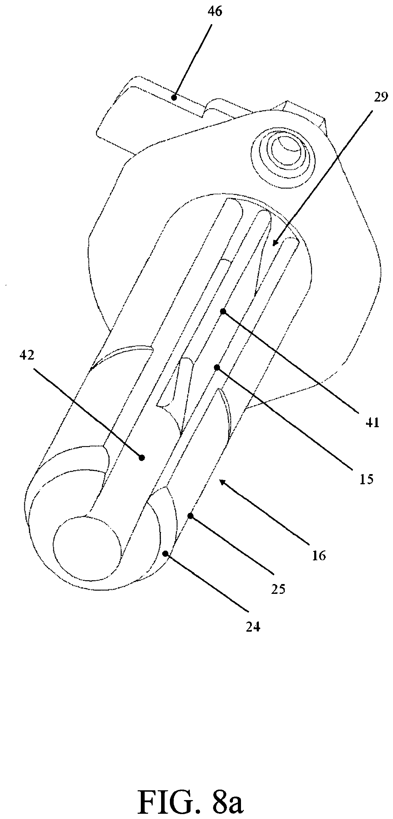

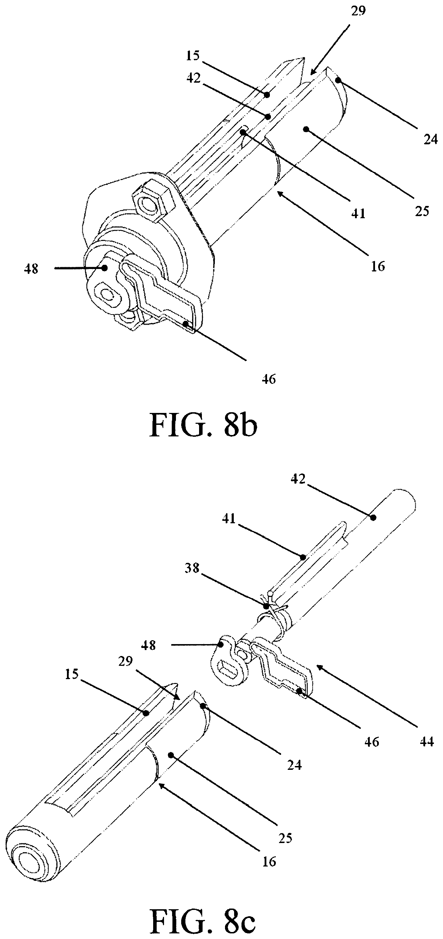

In a winding device 10 for belts and ropes 14 not according to the invention shown in Figures 8a, 8b and 8c, the pin 16 comprises a housing 29, preferably longitudinal, made therein, and the fastening means 15 of the belt 14 comprise a blocking element 41 of the belt 14, inserted rotatable into the housing 29 and projecting therefrom to block an edge of the belt 14, allowing its winding on the pin 16.

This winding device 10 for belts and ropes 14 further comprises activating means 44 adapted to activate the blocking element 41 of the belt 14.

Preferably, the fastening means 15 of the belt 14 comprise a shaft 42 inserted rotatable into the housing 29, connected to the blocking element 41 of the belt 14, composed for example of a blade 41 projecting from the housing 29 to block an edge of the belt 14 between the blocking element 41 itself and the edge of the notch 15.

In a preferred way, the activating means 44 comprise a push-button 46 adapted to push a lever 48 connected to the shaft 42, for example keyed thereto, to rotate it, thereby rotating the shaft 42 around its axis, together with the blade 41 connected thereto; in a preferred way, the activating means 44 further comprise an elastic element 38, for example a torsion spring, to keep the blade 41 in contact with the belt 14, which is thereby kept gripped against the edge of the notch 15.

Advantageously, this winding device 10 for belts and ropes allows using a smaller winding diameter of the belt, capturing and fastening an edge with a small length to enable the disconnection and unloading step of the roll of belt wound onto the pin.

Advantageously, by pressing the push-button 46, the blade 41 is rotated, freeing the edge of the belt 14; this operation is performed when winding: by pressing the push-button 46, the blade 41 opens, creating the space for inserting the terminal edge of the belt 14 between the blade 41 itself and the edge of the notch 15; by releasing the push-button 46, the spring 38 keeps the blade 41 in contact with the belt 14, keeping it gripped against the edge of the notch 15, allowing to start winding the belt 14.

Advantageously, the winding device 10 for belts and ropes of the invention allows an easy use even under negative weather conditions, for example with wet belts or ropes, avoiding to wet hands or gloves of a user and allowing to wring the belt when winding it, expelling water therefrom.

Advantageously, the winding device for belts and ropes of the invention allows reducing the necessary time to re-order and place the belts or ropes, further preventing their deterioration due to an incorrect winding, and further allows placing the device 10 occupying a reduced space, storing it together with the wound belts, leaving the last belt wound thereon.

Moreover, its simple operation with an almost complete absence of maintenance makes it suitable to be used also in scarcely clean environments, without being it necessary to particularly take care of it when using or when storing it.

## Claims

1. Winding device (10) for belts and ropes comprising:
- a first element (11);
- a second element (12) rotatably and removably connected to the first element (11) and comprising fastening means (15) of a belt (14) or rope;
- catching means (18) connected to the second element (12) to allow a user to manually rotate the second element (12) and the fastening means (15) to wind the belt or rope (14) blocked by the fastening means (15),
wherein the second element (12) comprises a pin (16) on which the fastening means (15) are made, said pin (16) being rotatably and removably connected to the first element (11) to wind on the pin (16) the belt or rope (14),
**characterized in that** the pin (16)
comprises at least one housing (29) in which a projecting element (31) is inserted, rotatable on its axis and having a first external surface adapted to go out of the housing (29) when the projecting element (31) is rotated in a first position, thereby allowing to increase the diameter of the pin (16), and having a second plane external surface which remains inside the housing (29) when the projecting element (31) is rotated in a second position, to enable the belt (14) to go out of the pin (16) when it is wound,
wherein the projecting element (31) comprises a projection (36) obtained next to the first element (11) adapted to be inserted in a continuous circular seat obtained in the first element (11), to connect the first element (11) and the second rotatable element (12), preventing a disengagement of the pin (16) during the winding operation.

2. Winding device (10) for belts and ropes according to claim 1, **characterized in that** the fastening means are composed of a notch (15) made on the pin (16), within which an end of the belt or rope (14) can be inserted.

3. Winding device (10) for belts and ropes according to claim 1 or 2, **characterized in that** the pin (16) comprises a part (24) shaped as a cone and/or has an end (25) with reduced diameter to keep a distance between the belt or the rope (14) and the pin (16), when is wound thereon, in order to decrease a friction between the wound belt or rope (14) and the pin (16).

4. Winding device (10) for belts and ropes according to claim 2 or 3, **characterized in that** the pin (16) is formed of two hollow semi-cylindrical shells (27) which, when flanked, form the pin (16), leaving between them the notch (15) for inserting an edge of the belt (14).

5. Winding device (10) for belts and ropes according to any one of the previous claims, **characterized in that** the first element (11) and the second element (12) have a substantially plane shape, to allow placing the device (10) occupying a reduced space.

6. Winding device (10) for belts and ropes according to any one of the previous claims, **characterized in that** it comprises second catching means (19) connected to the first element (11) to allow a user a firm grip of the winding device (10) when he manually rotates the second element (12) with respect to the first element (11) to wind the belt or the rope (14).

## Patentansprüche

1. Aufwickelvorrichtung (10) für Gurte und Seile umfassend:
- ein erstes Element (11);
- ein zweites Element (12), das drehbar und lösbar mit dem ersten Element (11) verbunden ist und Befestigungsmittel (15) für einen Riemen (14) oder ein Seil umfasst;
- Greifmittel (18), die mit dem zweiten Element (12) verbunden sind, um es einem Benutzer zu ermöglichen, das zweite Element (12) und die Befestigungsmittel (15) manuell zu drehen, um das Band oder die Schnur (14) aufzuwickeln, die durch die Befestigungsmittel blockiert sind ( fünfzehn),
wobei das zweite Element (12) einen Stift (16) umfasst, auf dem die Befestigungsmittel (15) hergestellt sind, wobei der Stift (16) drehbar und entfernbar mit dem ersten Element (11) verbunden ist, um auf den Stift (16) das Band oder die Schnur (14),
**dadurch gekennzeichnet, dass** der Stift (16) mindestens ein Gehäuse (29) umfasst, in das ein vorstehendes Element (31) eingesetzt ist, das um seine Achse drehbar ist und eine erste äußere Oberfläche aufweist, die in der Lage ist, aus dem Gehäuse (29) herauszukommen, wenn das vorstehende Element ist (31) in eine erste Position gedreht wird, wodurch ermöglicht wird, dass der Durchmesser des Stifts (16) vergrößert wird, und eine zweite flache äußere Oberfläche aufweist, die innerhalb des Gehäuses (29) verbleibt, wenn das vorstehende Element (31) in a gedreht wird zweite Position, um den Austritt des Riemens (14) aus dem Stift (16) zu erleichtern, wenn er aufgerollt ist,
bei dem das vorstehende Element (31) einen Vorsprung (36) umfasst, der entsprechend dem ersten Element (11) erhalten wird und in einen durchgehenden kreisförmigen Sitz passen kann, der in dem ersten Element (11) erhalten wird, um das erste Element (11) zu verbinden, und das zweite Element (12) drehbar ist, wodurch ein Lösen des Stifts (16) während des Walzvorgangs verhindert wird.

2. Aufwickelvorrichtung (10) für Gurte und Seile nach Anspruch 1, **dadurch gekennzeichnet, dass** die Befestigungsmittel aus einer am Stift (16) angebrachten Kerbe (15) bestehen, in die ein Ende des Riemens oder der Schnur eingeführt werden kann ( 14).

3. Aufwickelvorrichtung (10) für Gurte und Seile nach Anspruch 1 oder 2, **dadurch gekennzeichnet, dass** der Stift (16) einen Teil (24) mit konischer Form aufweist und/oder ein Ende (25) mit verringertem Durchmesser zum Abstandhalten hat zwischen dem Band oder der Schnur (14) und dem Stift (16), wenn es darauf aufgerollt wird, um die Reibung zwischen dem aufgerollten Band oder der Schnur (14) und dem Stift (16) zu verringern.

4. Aufwickelvorrichtung (10) für Gurte und Seile nach Anspruch 2 oder 3, **dadurch gekennzeichnet, dass** der Stift (16) durch zwei hohle Halbzylinderschalen (27), die nebeneinander den Stift (16) bilden, gebildet ist, austretend die ' Kerbe (15) zum Einführen der Gurtlasche (14).

5. Aufwickelvorrichtung (10) für Gurte und Seile nach einem der vorhergehenden Ansprüche, **dadurch gekennzeichnet, dass** das erste Element (11) und das zweite Element (12) eine im Wesentlichen flache Form aufweisen, um eine Aufbewahrung der Vorrichtung (10) zu ermöglichen auf kleinem Raum.

6. Aufwickelvorrichtung (10) für Gurte und Seile nach einem der vorangehenden Ansprüche, **dadurch gekennzeichnet, dass** sie zweite Greifmittel (19) umfasst, die mit dem ersten Element (11) verbunden sind, um dem Benutzer einen festen Griff der Vorrichtung zu ermöglichen (10) Aufwickler, wenn er das zweite Element (12) in Bezug auf das erste Element (11) manuell dreht, um das Band oder die Schnur (14) aufzuwickeln.

## Revendications

1. Dispositif d'enroulement (10) pour sangles et cordages comprenant :
- un premier élément (11) ;
- un deuxième élément (12) relié de manière rotative et amovible au premier élément (11) et comprenant des moyens de fixation (15) pour une sangle (14) ou un cordage ;
- des moyens de préhension (18) reliés au deuxième élément (12) pour permettre à un utilisateur de faire tourner manuellement le deuxième élément (12) et les moyens de fixation (15) pour enrouler la sangle ou le cordon (14) bloqué par les moyens de fixation (15),
dans lequel le deuxième élément (12) comporte un axe (16) sur lequel sont réalisés les moyens de fixation (15), ledit axe (16) étant relié de manière rotative et amovible au premier élément (11) pour s'enrouler sur l'axe (16) la sangle ou cordon (14),
**caractérisé en ce que** la goupille (16) comprend au moins un logement (29) dans lequel est inséré un élément en saillie (31) pouvant tourner sur son axe et ayant une première surface externe apte à sortir du logement (29) lorsque l'élément en saillie (31) est tourné dans une première position, permettant ainsi au diamètre de la broche (16) d'être augmenté, et ayant une seconde surface extérieure plate qui reste à l'intérieur du logement (29) lorsque l'élément en saillie (31) est tourné dans un deuxième position, pour faciliter la sortie de la courroie (14) de l'axe (16) lorsqu'elle est enroulée,
dans lequel l'élément en saillie (31) comprend une saillie (36) obtenue en correspondance avec le premier élément (11) apte à s'insérer dans un siège circulaire continu obtenu dans le premier élément (11), pour relier le premier élément (11) et le deuxième élément (12) pouvant tourner, empêchant le dégagement de la goupille (16) pendant l'opération de roulage.

2. Dispositif d'enroulement (10) pour sangles et cordages selon la revendication 1, **caractérisé en ce que** les moyens de fixation consistent en une encoche (15) pratiquée sur l'axe (16), à l'intérieur de laquelle une extrémité de la sangle ou du cordon peut être insérée ( 14).

3. Dispositif d'enroulement (10) pour sangles et cordages selon la revendication 1 ou 2, **caractérisé en ce que** l'axe (16) comprend une partie (24) ayant une forme conique et/ou a une extrémité (25) de diamètre réduit pour maintenir une distance entre la sangle ou cordon (14) et l'axe (16), lorsqu'il est enroulé sur celui-ci, de manière à diminuer le frottement entre la sangle ou cordon enroulé (14) et l'axe (16).

4. Dispositif d'enroulement (10) pour sangles et cordages selon la revendication 2 ou 3, **caractérisé en ce que** l'axe (16) est formé par deux coquilles semi-cylindriques creuses (27) qui forment côte à côte l'axe (16), laissant l'encoche (15) d'introduction du rabat de ceinture (14).

5. Dispositif d'enroulement (10) pour sangles et cordages selon l'une quelconque des revendications précédentes, **caractérisé en ce que** le premier élément (11) et le deuxième élément (12) ont une forme sensiblement plate, pour permettre le rangement du dispositif (10 ) occupant un petit espace.

6. Dispositif d'enroulement (10) pour sangles et cordages selon l'une quelconque des revendications précédentes, **caractérisé en ce qu'**il comporte des deuxièmes moyens de préhension (19) reliés au premier élément (11) pour permettre à l'utilisateur une prise ferme du dispositif d'enroulement (10) lorsqu'il fait tourner manuellement le deuxième élément (12) par rapport au premier élément (11) pour enrouler la sangle ou le cordon (14).
